# NEUE EUROPÄISCHE PATENTSCHRIFT

(11) **EP 1 071 534 B2**
(45) Veröffentlichungstag und Bekanntmachung des Hinweises auf die Entscheidung über den Einspruch: **10.09.2008**
(45) Hinweis auf die Patenterteilung: 04.02.2004
(21) Anmeldenummer: 00912366.2
(22) Anmeldetag: 11.02.2000
(51) Int. Cl.: B23K 26/00, B23K 26/06

(54) **VERFAHREN ZUR ERZEUGUNG DEFINIERT KONISCHER LÖCHER MITTELS EINES LASERSTRAHLS**
METHOD FOR MAKING DEFINED CONICAL HOLES USING A LASER BEAM
PROCEDE DE REALISATION DE TROUS CONIQUES DEFINIS AU MOYEN D'UN RAYON LASER

(30) Priorität: 11.02.1999 DE 19905571
(43) Veröffentlichungstag der Anmeldung: 31.01.2001
(73) Patentinhaber: ROBERT BOSCH GMBH, 70442 Stuttgart (DE)
(72) Erfinder: BENZ, Gerhard, D-71032 Böblingen (DE); WAWRA, Thomas, D-89558 Döhmenkirck (DE); SCHNEIDER, Rainer, D-31171 Schellerten/Mahlerten (DE); EISEMANN, Achim, D-74196 Neuenstadt (DE)
(86) Internationale Anmeldenummer: PCT/DE2000/000405
(87) Internationale Veröffentlichungsnummer: WO 2000/047359

(56) Entgegenhaltungen:
- CH-A- 572 798
- CH-A4- 1 335 767
- DE-A- 3 317 022
- DE-T- 69 004 225
- US-A- 4 336 439
- US-A- 4 547 651
- US-A- 4 822 974
- US-A- 4 908 493
- Präzisionlaserstrahlfertigungstechnik für den Maschinenbau. Abschlussbericht FORLAS I, 01.01.1994-31.07.1997, Seiten 112 bis 118.
- "Microdrilling of metals with ultrashort laser pulses", Tönshof H.K. Momma, C. Ostendorf A.,Nolte S., Kamlage G, (Laser Zentrum Hannover e.V. Germany)
- Proceedings of the Laser Materials processing Conference ICALEO 98 Orlando FL, USA : Laser Institute of America, 1998, P. A28-37 Vol. 1 of 2 (1x+xxv+447)pp. 10refs; Conference : Orlando, FL,USA 16-19 November 1998

## Beschreibung

Die Erfindung betrifft ein Verfahren zur Erzeugung von Löchern in einem Werkstück mittels eines Laserstrahls.

### Stand der Technik

Für eine Vielzahl von Anwendungen, beispielsweise zur Herstellung von Einspritzdüsen für Kraftfahrzeug-Otto- und Dieselmotoren ist die Erzeugung von Löchern mit einer definierten Lochgeometrie in Längsrichtung des Bohrloches wünschenswert. Insbesondere kann es erforderlich sein, konische Bohrlöcher mit einem zu einem Ende hin zunehmenden Lochquerschnitt zu erzeugen.

Es ist bekannt, derartige konische Löcher mittels Drahterodierens herzustellen, wobei die konische Geometrie des Bohrlochs durch eine Schwingung des Erodierdrahtes hervorgerufen wird. Aufgrund des aus Stabilitätsgründen erforderlichen Mindestdurchmessers des Drahtes ist dieses Verfahren für kleine Bohrlochdurchmesser im Bereich unterhalb 150 µm problematisch. Gerade die Herstellung kleiner Bohrlöcher mit hoher Präzision ist jedoch beispielsweise für Einspritzdüsen erforderlich. Weiterhin weist das Drahterodierverfahren den Nachteil auf, daß die konische Lochgeometrie schwer reproduzierbar ist und das Verfahren relativ langsam und damit kostenaufwendig ist.

US-A-4,822,974 und CH-A-13357/67 offenbaren Verfahren und Vorrichtungen gemäß dem Oberbegriffen den Patentansprüche 1 und 9.

Schließlich sind aus "Präzisionslaserstrahlfertigungstechnik für den Maschinenbau", Herausgeber M. Geiger, G. Reinhart, P. Hoffmann, M. Schulz, Gruner Druck GmbH, S. 109 - S. 125, verschiedene Laserstrahlbohr-Verfahren bekannt. Es wird auch ein "Taumel-Trepanierbohren" beschrieben, wobei durch eine Kippung eines Werkstückes in Bezug auf die Laserstrahlachse eine definierte Konizität des Loches ermöglicht wird.

### Vorteile der Erfindung

Bei dem erfindungsgemäßen Verfahren zur Erzeugung von Löchern in einem Werkstück mittels eines Laserstrahls mit den Merkmalen von Anspruch 1 ist durch Einstellung von Strahlgeometrie und/oder Strahlparametern des Laserstrahls eine definierte Lochgeometrie des Bohrlochs in dessen Längsrichtung herstellbar. Vorzugsweise kann das Bohrloch konisch ausgebildet werden, wobei der Bohrlochdurchmesser in Strahlaustrittsrichtung zunehmen kann. Das erfindungsgemäße Verfahren hat den Vorteil, daß durch Einstellung der Strahlgeometrie und/oder der Strahlparamter des Laserstrahls sehr flexible Lochgeometrien mit hoher Präzision herstellbar sind. Ein weiterer Vorteil ist, daß das erfindungsgemäße Verfahren auch auf sehr kleine Lochdurchmesser im Bereich von 100 µm und darunter anwendbar ist. Darüber hinaus ist das Bohrverfahren im Vergleich zu bekannten Bohrverfahren erheblich schneller, wodurch sich beim Einsatz in der industriellen Produktion merkliche Kostenvorteile realisieren lassen.

Gemäß dem erfindungsgemäßen Verfahren führt der Laserstrahl relativ zum Werkstück eine Taumelbewegung aus und durchläuft dabei eine Kegelmantelfläche. Durch die Taumelbewegung kann das Längsprofil des Bohrloches exakt definiert werden. Wird der Laserstrahl zusätzlich synchron mit der Taumelbewegung um die eigene Achse gedreht, ist zu jedem Zeitpunkt die gleiche Laserstrahlstelle in azimutaler Richtung im Eingriff mit dem Werkstück. Dadurch wird ein unrunder Laserstrahlquerschnitt egalisiert und es entstehen extrem runde Lochquerschnitte.

Gemäß dem erfindungsgemäßen Verfahren kann die Lochgeometrie in Längsrichtung bei Verwendung von polarisiertem Laserlicht durch Wahl von Polarisationsrichtung und/oder Polarisationsart eingestellt werden. Mittels eines linear polarisierten Laserstrahls kann eine ovale Lochgeometrie an der Seite des Lichtaustritts erzeugt werden. Mittels zirkular polarisierten Laserlichts lassen sich besonders runde Lochquerschnitte realisieren.

Gemäß einer Ausführungsform des erfindungsgemäßen Verfahrens wird der Laserstrahl mittels einer Linse auf das Werkstück fokussiert, wobei Brennweite der Linse, Strahldurchmesser am Linseneintritt, Fokusdurchmesser und Leistungsdichte des Laserstrahls so gewählt werden, daß ein konisches Bohrloch entsteht. Vorzugsweise liegt der Fokusbereich des Laserstrahls am Locheintritt an der Werkstückoberfläche. Hinter dem Fokusbereich weitet sich der Laserstrahl wieder auf, wodurch sich bei genügender Leistungsdichte ein konisches Längsprofil des Bohrloches ergibt.

Um eine sehr enge Bündelung des Laserstrahls im Fokusbereich zu erzielen, kann es zweckmäßig sein, den Querschnitt des Laserstrahls vor dessen Durchgang durch die Linse aufzuweiten. Hierfür kann eine teleskopartige Linsenanordnung verwendet werden, die im Strahlengang zwischen Laser und Linse praktisch an beliebiger Stelle plaziert werden kann.

Eine erfindungsgemäße Vorrichtung zur Erzeugung von Löchern in einem Werkstück weist eine Laserstrahlquelle, eine Linse zur Fokussierung des Laserstrahls auf das Werkstück, eine Einrichtung zur Erzeugung einer Taumelbewegung des Laserstrahls und eine drehbare Polarisationseinrichtung mit einer λ/2-Platte und einer relativ zu dieser drehbaren λ/4-Platte auf .

### Zeichnungen

Die Erfindung wird im folgenden anhand von bevorzugten Ausführungsbeispielen unter Bezugnahme auf die beiliegenden Zeichnungen im Detail erläutert, in denen
- Figur 1: eine schematische Querschnittsansicht der Erzeugung eines konischen Loches in einem Werkstücks mittels eines bewegten Laserstrahls zeigt;
- Figur 2: schematisch eine Polarisatoreinrichtung zur Erzeugung unterschiedlicher Polarisationswinkel und Polarisationsarten zeigt; und
- Figur 3: schematisch die Lochgeometrie in Abhängigkeit von der Polarisation des Laserstrahls zeigt.

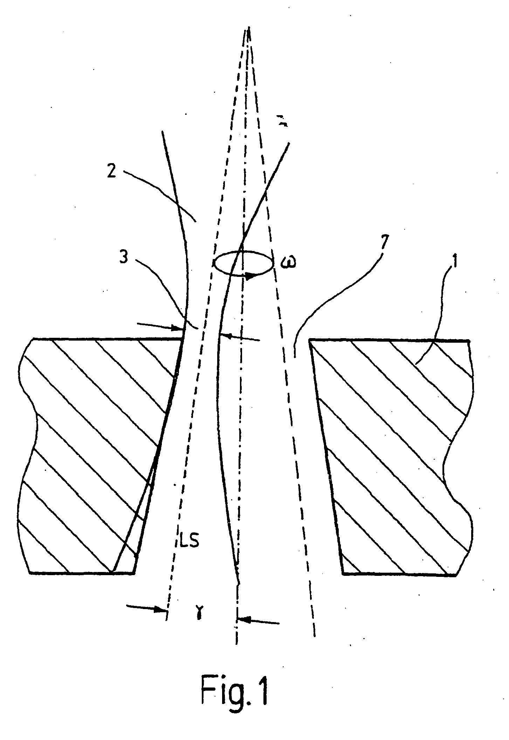

Figur 1 zeigt eine schematische Querschnittsdarstellung eines Laser-Bohrvorganges zur Erzeugung eines Loches 7 in einem Werkstück 1.

Gemäß einer ersten Variante des erfindungsgemäßen Verfahrens kann eine definierte Lochkonizität durch Einstellung der Brennweite der Linse, des Strahldurchmessers am Linseneintritt, des Fokusdurchmessers und der Leistungsdichte des Laserstrahls eingestellt werden. Eine wesentliche Rolle spielt dabei die sogenannte Fokussierzahl, die der Quotient aus Brennweite der Linse und dem Strahldurchmesser des Strahls beim Eintritt in die Linse ist. Die Fokussierzahl ist ein Maß für die Strahldivergenz beziehungsweise den Strahldurchmesser im Fokusbereich. Je geringer die Fokussierzahl, desto stärker wird bei ausreichender Leistungsdichte die Konizität eines mit dem Laserstrahl hergestellten Loches. Typische verwendete Fokussierzahlen liegen im Bereich von 8 bis 25.

Fokussiert man den Laserstrahl auf die Werkstückoberfläche, so wird der Lochdurchmesser am Strahleintritt in erster Linie durch den Fokusdurchmesser bestimmt. Der weitere Lochverlauf sowie der Durchmesser am Lochaustritt kann durch die von der Fokussierzahl und der Strahlqualität vorgegebenen Strahlpropagation eingestellt werden. Um das Strahlprofil auf das Bohrloch abzubilden, ist darauf zu achten, daß im gesamten Lochbereich die jeweilige Leistungsdichte im Laserstrahl oberhalb der jeweiligen Schwellintensität für den Materialabtragungsprozeß liegt.

Durch eine geeignete Taumelbewegung des Laserstrahls kann eine definierte Lochkonizität hergestellt werden. Dieses Verfahren ist in Figur 1 illustriert. Der Laserstrahl 2, dessen Strahlprof il in Längsrichtung schematisch dargestellt ist, wird mit einer Kreisfrequenz ω auf einer durch gestrichelte Linien angedeuteten Kegelmantelfläche um eine durch eine strichpunktierte Linie angegebene Mittelachse gedreht. Die Bahn dieser Drehbewegung zusammen mit dem Strahlquerschnitt ergibt hierbei die gewünschte Lochform. Dabei ist die Relativbewegung zwischen Laserstrahl und Werkstück entscheidend, so daß sowohl der Laserstrahl als auch das Werkstück oder beides bewegt werden kann, wobei die erstgenannte Variante im Falle von komplizierten Werkstückgeometrien die technisch am einfachsten zu verwirklichende ist.

Da der Laserstrahl gleichzeitig synchron um seine eigene Achse entsprechend der Drehfrequenz der Taumelbewegung gedreht, so ist zu jedem Zeitpunkt die gleiche Stelle des Laserstrahls in azimutaler Richtung im Eingriff mit dem Werkstück. Es können dann extrem runde Löcher realisiert werden, da ein ungleichmäßiger Laserstrahlquerschnitt kompensiert wird. Wiederum kann die Drehbewegung durch Drehen der Laserstrahlquelle oder durch Drehen des Werkstücks erreicht werden.

Gemäß der Erfindung wird eine definierte Lochgeometrie durch geeignete Wahl von Polarisationsrichtung und Polarisationsart des Laserstrahls eingestellt. Die Polarisation eines Laserstrahls wird je nach Orientierung der Polarisationsrichtung unterschiedlich absorbiert. Der Lochaustritt wird durch die Polarisation des Laserlichts maßgeblich mitbestimmt. Um einen kreisförmigen Lochaustritt zu erhalten, ist eine zirkulare Polarisation erforderlich, welche durch geeignete Winkelanordnung eines λ/4-Plättchens aus linear polarisiertem Licht erzeugt werden kann. Eine weitere Möglichkeit zur Erzeugung eines kreisförmigen Lochaustritts ist in Verbindung mit dem anhand Figur 1 erläuterten Verfahren möglich, wenn die Polarisationsebene des Laserstrahls synchron zur Taumelbewegung mittels eines λ/2-Plättchens oder eines Bildrotators nachgedreht wird.

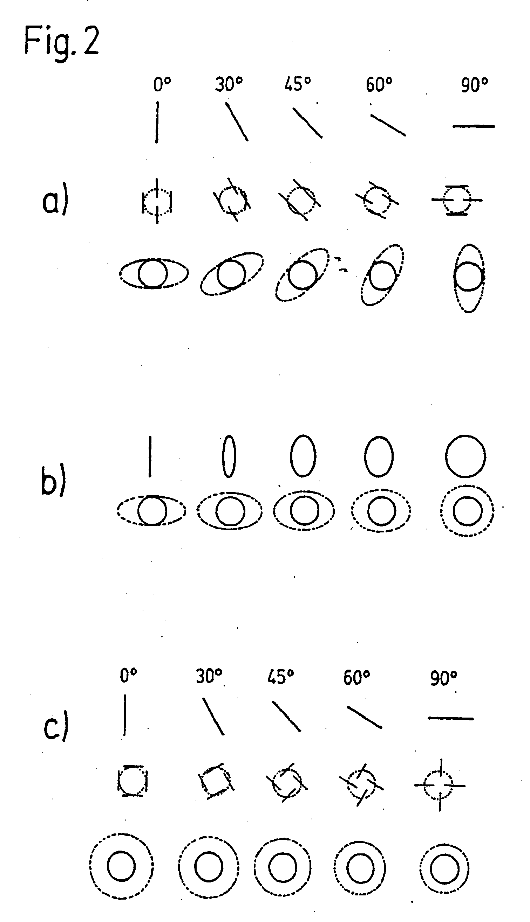

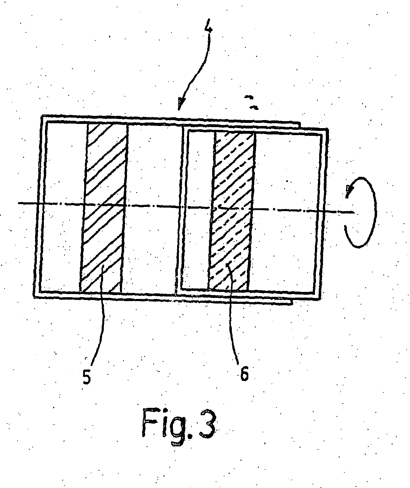

Eine Polarisatorvorrichtung zur Erzeugung derartiger definierter Polarisationen ist in Figur 3 schematisch dargestellt. Die Polarisatorvorrichtung 4 weist eine λ/2-Platte 5 und eine drehbar dazu gelagerte λ/4-Platte 6 auf . Je nach Position der λ/4-Platte relativ zur λ/2-Platte kann die Polarisation des Laserstrahls zwischen linear polarisiert (Figur 2b ganz links) und zirkular polarisiert (Figur 2b ganz rechts) eingestellt werden. Durch Drehung der gesamten Polarisatorvorrichtung 4 kann die Polarisationsebene gedreht werden.

Figur 2 zeigt schematisch die Auswirkung verschiedener Polarisationen auf die Lochgeometrie.

Mittels einer linearen Polarisation des Laserstrahls lassen sich definierte ovale Lochaustrittsquerschnitte erzeugen. Figur 2a zeigt 5 Beispiele mit Polarisationswinkeln zwischen 0° (senkrechte Polarisation) bis 90° (parallele Polarisation), wobei der Laserstrahl gleichzeitig eine Taumelbewegung ausführt, die in der zweiten Zeile von Figur 2a illustriert ist. Der Lochquerschnitt am Locheintritt ist in der dritten Zeile von Figur 2a durch eine durchgezogene Linie, der Lochaustritt durch eine punktierte Linie dargestellt.

Figur 2b zeigt den Übergang von linearer Polarisation (links) zu zirkularer Polarisation (rechts). Während der Lochquerschnitt am Locheintritt in jedem Fall rund ist, ist der Querschnitt beim Lochaustritt (punktierte Linie) nur im Falle der zirkularen Polarisation rund. Durch Veränderung der Polarisationsart von zirkular zu linear läßt sich eine definierte Ovalform am Lochausgang realisieren, wobei die Längsebene des Ovals senkrecht zur Polarisationsebene liegt.

Figur 3 illustriert das erfindungsgemäße Verfahren, bei dem die Polarisationsebene mit der Taumelbewegung des Laserstrahls mitgedreht wird. In jedem Fall erhält man daher sowohl am Locheintritt als auch am Lochaustritt einen runden Lochquerschnitt. Der Lochdurchmesser am Lochaustritt und damit die Konizität variiert jedoch in Abhängigkeit davon, ob die Polarisationsebene radial zur Kreisbewegung des Laserstrahls ist (Figur 2c, rechts) oder tangential dazu liegt (Figur 2c, links). Im ersteren Fall erhält man eine geringere Lochkonizität als im letzten Fall. So kann die Lochkonizität durch Drehung der Polarisationsebene definiert eingestellt werden.

Mit dem erf indungsgemäßen Verfahren lassen sich so durch Einstellung von Strahlgeometrie und/oder Strahlparametern eines Laserstrahls präzise Bohrlöcher mit definiertem Längsprofil, inbesondere konische Bohrlöcher herstellen. Das Verfahren eignet sich auch für Löcher mit kleinem Durchmesser im Bereich von 100 µm und darunter und ist daher insbesondere zur Herstellung von Einspritzdüsen oder dergleichen vorteilhaft.

## Patentansprüche

1. Verfahren zur Erzeugung von Löchern (7) in einem Werkstück (1) mittels eines Laserstrahls (2), wobei der Laserstrahl (2) relativ zum Werkstück (1) eine Taumelbewegung ausführt und dabei eine Kegelmantelfläche durchläuft, **dadurch gekennzeichnet, dass** ein polarisierter Laserstrahl eingesetzt wird, dessen Polarisationsebene synchron mit der Taumelbewegung gedreht wird, wobei der Laserstrahl synchron um seine eigene Achse entsprechend der Drehfrequenz der Taumelbewegung gedreht wird, sodass zu jedem Zeitpunkt die gleiche Stelle des Laserstrahls in azimutaler Richtung im Eingriff mit dem Werkstück ist.

2. Verfahren nach Anspruch 1, **dadurch gekennzeichnet, daß** das Bohrloch (7) konisch ausgebildet wird.

3. Verfahren nach Anspruch 2, **dadurch gekennzeichnet, daß** der Bohrlochdurchmesser in Strahlaustrittsrichtung zunimmt.

4. Verfahren nach Anspruch 1, **dadurch gekennzeichnet, daß** der Laserstrahl (2) vor Erreichen der Linse aufgeweitet wird.

5. Verfahren nach Anspruch 1, **dadurch gekennzeichnet, daß** der Fokusbereich des Laserstrahls (2) am Locheintritt an der Werkstückoberfläche liegt.

6. Verfahren nach Anspruch 1, **dadurch gekennzeichnet, daß** die Lochgeometrie durch Wahl der Polarisierungsrichtung und/oder der Polarisierungsart einstellbar ist.

7. Verfahren nach Anspruch 6, **dadurch gekennzeichnet, daß** ein linear polarisierter Laserstrahl verwendet wird..

8. Verfahren nach Anspruch 6, **dadurch gekennzeichnet, daß** ein zirkular polarisierter Laserstrahl verwendet wird.

9. Vorrichtung zur Erzeugung von Löchern (7) in einem Werkstück (1), aufweisend
- eine Laserstrahlquelle,
- eine Linse zur Fokussierung des Laserstrahls (2) auf das Werkstück (1),
- eine Einrichtung zur Erzeugung einer Taumelbewegung des Laserstrahls (2), wobei dieser eine Kegelmantelfläche durchläuft, **gekennzeichnet durch**
- eine drehbar angeordnete Polarisatoreinrichtung (4) mit einer λ/2-Platte (5) und einer relativ zu dieser drehbaren λ/4-Platte (6), derart, daß die Polarisationsebene des Laserstrahls (2) synchron mit der Taumelbewegung drehbar ist.

## Claims

1. Method for making holes (7) in a workpiece (1) using a laser beam (2), the laser beam (2) executing a wobbling movement relative to the workpiece (1) and traversing a conical envelope surface in the process, **characterized in that** use is made of a polarized laser beam whose polarization plane is rotated synchronously with wobbling movement, with the laser beam being rotated synchronously about its own axis in a fashion corresponding to the rotational frequency of the wobbling movement, such that the same position of the laser beam in the azimuthal direction engages with the workpiece at every instant.

2. Method according to Claim 1, **characterized in that** the drill hole (7) is conically formed.

3. Method according to Claim 2, **characterized in that** the drill hole diameter increases in the beam exit direction.

4. Method according to Claim 1, **characterized in that** the laser beam (2) is expanded before reaching the lens.

5. Method according to Claim 1, **characterized in that** the region of focus of the laser beam (2) is situated at the hole entrance on the workpiece surface.

6. Method according to Claim 1, **characterized in that** the hole geometry can be set by selecting the correction of polarization and/or the type of polarization.

7. Method according to Claim 6, **characterized in that** a linearly polarized laser beam is used.

8. Method according to Claim 6, **characterized in that** a circularly polarized laser beam is useful.

9. Apparatus for making holes (7) in a workpiece (1), having
- a laser beam source
- a lens for focussing the laser beam (2) onto the workpiece (1),
- a device for producing a wobbling movement of the laser beam (2), the latter traversing a conical envelope surface, **characterized by**
- a rotatably arranged polarizer device (4) having a λ/2 plate (5) and a λ/4 plate (6) which can be rotated relative to the latter in such a way that the polarization plane of the laser beam (2) can be rotated synchronously with the wobbling movement.

## Revendications

1. Procédé pour réaliser des trous (7) dans une pièce (1) à l'aide d'un rayon laser (2), le rayon laser (2) décrivant un mouvement de nutation par rapport à la pièce (1) et parcourant donc une surface enveloppe de cône,
**caractérisé en ce que**
l'on utilise un rayon laser polarisé dont le plan de polarisation tourne en synchronisme avec le mouvement de nutation,
le rayon laser tournant en synchronisme autour de son propre axe en fonction de la fréquence de rotation du mouvement de nutation, de sorte qu'à chaque instant, le même point du faisceau laser est dans la direction azimutale avec la pièce.

2. Procédé selon la revendication 1,
**caractérisé en ce que**
le perçage (7) est conique.

3. Procédé selon la revendication 2,
**caractérisé en ce que**
le diamètre du perçage augmente en direction de sortie du rayon.

4. Procédé selon la revendication 1,
**caractérisé en ce que**
le rayon laser (2) est élargi avant d'atteindre la lentille.

5. Procédé selon la revendication 1,
**caractérisé en ce que**
la zone de foyer du rayon laser (2) à l'entrée du trou se trouve sur la surface de la pièce.

6. Procédé selon la revendication 1,
**caractérisé en ce que**
la géométrie du trou peut être réglée en choisissant la direction de polarisation et/ ou le type de polarisation.

7. Procédé selon la revendication 6,
**caractérisé en ce que**
l'on utilise un rayon laser à polarisation linéaire.

8. Procédé selon la revendication 6,
**caractérisé en ce que**
l'on utilise un rayon laser est à polarisation circulaire.

9. Dispositif pour réaliser des trous (7) dans une pièce (1), lequel présente
- une source de rayon laser,
- une lentille destinée à focaliser le rayon laser (2) sur la pièce (1),
- une installation pour que le rayon laser (2) décrive une nutation, celui-ci parcourant une surface enveloppe de cône,
**caractérisé par**
une installation de polarisation (4) disposée de façon à pouvoir tourner et qui comprend une lame demi-onde (5) et une lame quart d'onde (6) laquelle peut tourner par rapport à la lame demi-onde de telle manière que le plan de polarisation du rayon laser tourne en synchronisme avec le mouvement de nutation.
